# EUROPEAN PATENT SPECIFICATION

(11) **EP 3 427 895 B1**
(45) Date of publication and mention of the grant of the patent: **03.11.2021**
(21) Application number: 18181311.4
(22) Date of filing: 03.07.2018
(51) Int. Cl.: B23Q 11/00

(54) **SHAVINGS SUCTION HEADPIECE FOR A WORKING TOOL**
SPÄNEABSAUGUNGSKOPFTEIL FÜR EIN WERKZEUG
DISPOSITIF DE SUCTION DE COPEAUX POUR OUTIL

(30) Priority: 13.07.2017 IT 201700078831
(43) Date of publication of application: 16.01.2019
(73) Proprietor: SCM Group S.p.A., 47921 Rimini (RN) (IT)
(72) Inventor: SCHOLZ, Frieder, 47921 Rimini (IT); KAUPERT, Christian, 47921 Rimini (IT); BINNINGER, Karsten, 47921 Rimini (IT)
(74) Representative: Tiburzi, Andrea

(56) References cited:
- DE-A1- 4 218 247
- US-A- 4 037 982
- US-A- 6 079 078
- US-A1- 2008 247 833

## Description

This invention relates to a shavings suction headpiece for a working tool, and relative working tool.

More specifically, the invention relates to a shavings suction headpiece for a working tool, in particular for milling, which is able to suck the shavings produced by the milling of materials, in particular wood, more efficiently. The headpiece according to the invention is able to partially modify its shape to allow the milling of edges of work pieces whilst continuing to guarantee an adequate suction of the shavings.

The invention has originated within the research project "Local flexible manufacturing of green personalized furniture close to the customer in time, space and cost" (project partners: SCM Group Spa, University of Applied Science of Southern Switzerland, Synesis Consorzio with external activities, McNally & Finlay Limited, Milan Polytechnic, Missler Software, Technology Transfer System Srl, Veragouth SA, Innovawood ASBL, Hochschule Rosenheim).

### Background art

The shavings are produced in the working (drilling, sawing, milling, lathing) mainly of wood, but also of materials and metal alloys. In the case of the latter, it has been possible to partially renounce, by means of a shape finishing process, the working/post-working with the production of shavings, whilst this is not possible in the wooden products.

Depending on the dimensional or precision requirements, it is often not possible to renounce the classic saws, milling cutters and drills. More specifically, in the case in which the old and new separation procedures are used in combination or in a high level of automation, the cleaning (absence of shavings) has an essential importance. The application apparatuses and the methods for measurement of the shavings can be considered to be crucial.

Without doubt, in the working of allows and metal materials, the form of the shavings can be influenced mainly on the basis of the isotropic nature of the material of the piece (depending on the rigidity of the piece and the speed of turning, either some long spirals or many small flakes are produced).

The market of machine tools comprises a complex market of accessories. A plurality of firms deal themselves with the use of the waste, starting from their production (see above) up to their separation and reuse. There are firms which deal with industries that process wood, industries which process metals or both. Potential interested parties and many others: suppliers of infrastructures and accessories.

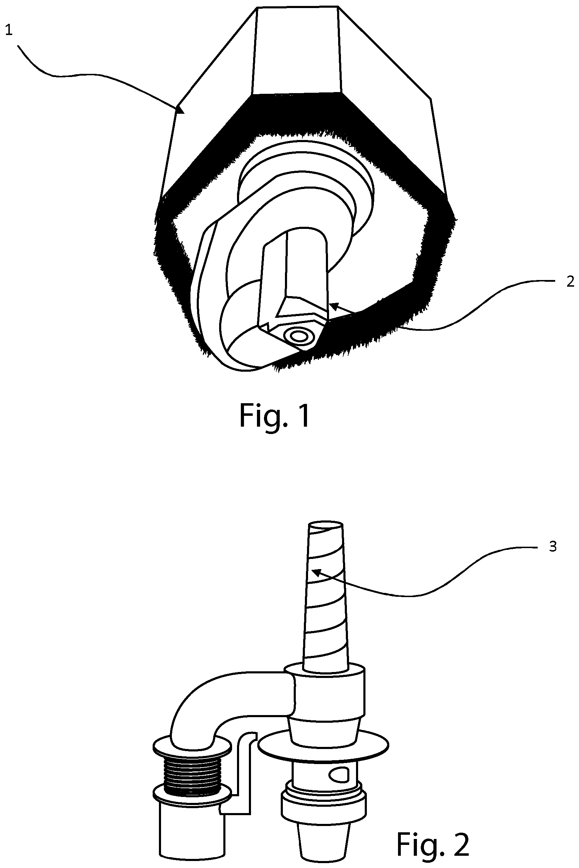

With reference to Figure 1, the so-called spatial suction devices 1 are those mainly used for the collection of shavings in CNC (Computer Numerical Control) working stations. In this case, a larger region is sucked around the milling tool 2. These spatial suction devices have the following drawbacks.

Firstly, this type of suction device is not very efficient. A large part of the shavings is not sucked and falls downwards. This results in an increased need for cleaning of the machine by the cleaning personnel as well as, partly, damage to the product (for example, scratches).

Moreover, the spatial suction devices consume considerable energy, since, on the basis of the speed of the air to be maintained as well as the resulting large currents, considerable electrical power is required.

It is therefore necessary to improve the degree of collection of the shavings. The problem of the collection of shavings in the working of wood is the drastic drop in suction speed with the increase in distance of the suction opening. That is to say, the collection of shavings reduces as the distance between the position of production of the shavings (work piece) and the suction opening increases. The minimising of the distance between the milling tool and the suction opening improves the degree of collection of the shavings. The advantage in this case is that the flow of air may be reduced, as the shavings which fall close to the tool are better collected and conveyed via the air flow.

The energy costs which have been increasing from many years represent a cost factor for many firms and therefore considerably affect the competitiveness. A potential significant optimisation lies mainly in the reduction of the energy requirements and, therefore, in the operating costs of the production processes. In the machines for working wood, the suction apparatus consumes on average 45% of the electricity demand, followed by the electricity consumption of the actual machine for working wood and the air pressure. It is therefore necessary to minimise the flow of air and, therefore, the electricity consumption.

Research has been carried out in recent years in the field of CNC machine tools for improving the collection of shavings. With reference to Figure 2, the University of Stuttgart has conceived, in the field of working meals, a suction headpiece (not illustrated) according to the operation of a spiral band elastic 3 which has been tested in a CNC station for working wood.

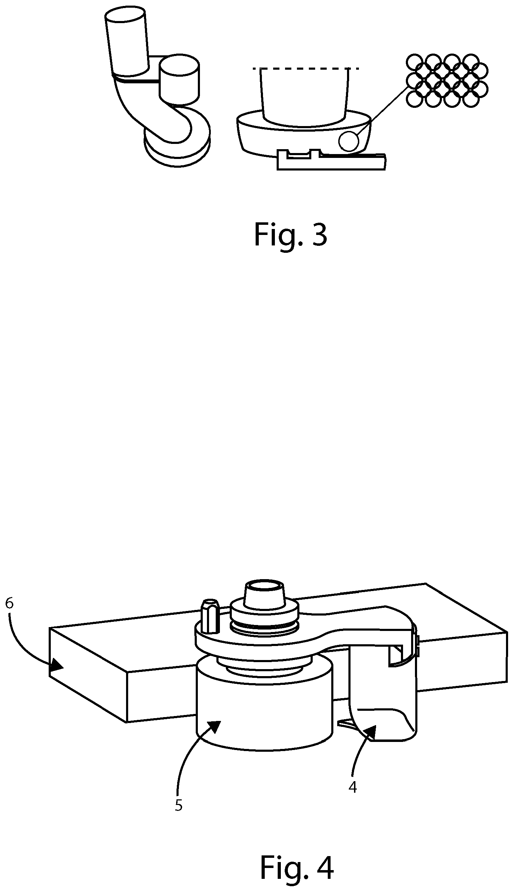

In fact, there were already extensions for the use of collection devices as a function of the type of working. Different suction headpieces suitable for the working operations considered each time are replaced in that case for the process phase if the tool is changed. The University of Braunschweig has developed an optimised suction headpiece in this field with special sealing to the surface of the work piece (Figure 3).

However, none of the developments described are widely applied in practice. The main reasons are that the surfaces of sensitive coatings are scratched or that these suction headpieces are only suitable for use in the case of flat surfaces.

Different systems are used by manufacturers of machines and tools for improving the collection of shavings and in the field of shavings suction in practice. The problem in this case is that it is only mainly used for certain working operations. Additional tools are used, such as elements for conveying shavings of which an example is shown in Figure 4 close to the working tool 5 which works the piece 6, which must convey the jet of shavings in the direction of the suction headpiece.

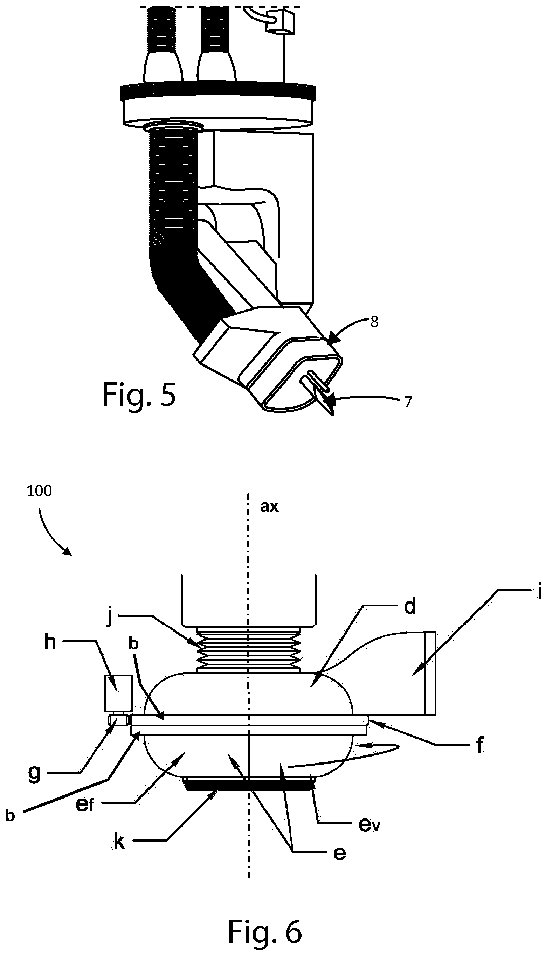

In order to improve the suction of the shavings, an attempt is also made in the machinery technology to make the spatial suction as small as possible. That is to say, with reference, for example, to figure 5, the suction opening 8 is positioned as close as possible around the tool 7. The suction headpieces used in this case are mainly linked to a particular size and cannot therefore be used with the particular tools and the aggregates.

In addition, the influence has not been studied in the prior art of the influence of the particular shape of the headpiece on the speed of suction of the shavings, which is essential in the case of an increase in the working speed and when a large quantity of shavings is produced.

A known technical solution is disclosed in the German document DE 4218247 A1, on which the preamble of appended claim 1 is based.

The aim of the invention is therefore to provide a headpiece and a suction apparatus which improves the degree and/or speed of removal of shavings in CNC machine tools and in the general 2D and 3D working. Another aim of this invention is to provide a headpiece and/or suction apparatus which allows an energy saving by the reduction of the suction air flow.

The object of this invention is a device and an apparatus according to the accompanying claims, which form an integral part of this description.

The invention is now described, by way of example and without limiting the scope of the invention, with reference to the accompanying drawings, in which:
- Figure 1 illustrates a first device for the suction of shavings according to the prior art;
- Figure 2 illustrates a second device for the suction of shavings according to the prior art;
- Figure 3 illustrates a third device for the suction of shavings according to the prior art;
- Figure 4 illustrates a fourth device for the suction of shavings according to the prior art;
- Figure 5 illustrates a fifth device for the suction of shavings according to the prior art;
- Figure 6 illustrates a diagram of a shavings suction headpiece according to the invention;
- Figure 7 illustrates the processing of flat materials with an apparatus equipped with the headpiece according to the invention;
- Figure 8 illustrates the processing of the edges of a piece with an apparatus equipped with the headpiece according to the invention;
- Figure 9 illustrates the processing of the a three-dimensional piece with an apparatus equipped with the headpiece according to the invention;
- Figure 10 illustrates an approximate three-dimensional diagram of the headpiece according to the invention when an edge of a piece is processed;
- Figure 11 illustrates two possible forms of processing with the headpiece according to the invention, wherein the piece being processed is positioned on a support panel and on the machine surface;
- Figure 12 illustrates the headpiece according to the invention inside a processing apparatus;

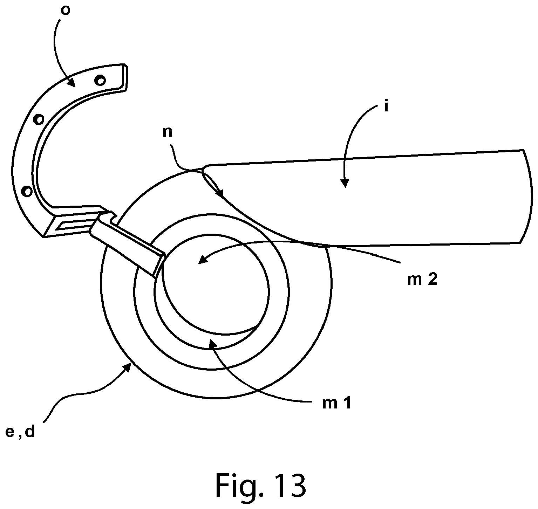

- Figure 13 illustrates an example of toroidal embodiment of the headpiece according to the invention, with a tube for tangential evacuation of the shavings;
- Figure 14 illustrates a first embodiment of the headpiece according to the invention, with a radial evacuation tube (not shown), for a shavings evacuation test;
- Figure 15 illustrates a second embodiment of the headpiece according to the invention, which is toroidal and with a radial evacuation tube for the shavings evacuation test;
- Figure 16 illustrates a contour based on the speeds in the plane XY in the median section of the suction tube, for the headpiece of Figure 14;
- Figure 17 illustrates a contour based on the speeds in the plane XY in the median section of the suction tube, for the headpiece of Figure 15;
- Figure 18 illustrates in (a) and (b) the speed vectors in the plane XY in the median suction of the suction tube ((b) is a detail of (a)), for the headpiece of Figure 14; and in (c) and (d) the speed vectors in the plane XY in the median section of the suction tube ((c) is a detail of (d)), for the headpiece of Figure 15;
- Figure 19 illustrates the speed vectors in the plane ZY (ref. Figure 10) in the median section of the headpiece, for the headpiece of Figure 14;
- Figure 20 illustrates the speed vectors in the plane ZY in the median section of the headpiece, for the headpiece of Figure 15;
- Figure 21 illustrates the speed vectors in the plane ZX in the median section of the headpiece, for the headpiece of Figure 14;
- Figure 22 illustrates the speed vectors in the plane ZX in the median section of the headpiece, for the headpiece of Figure 15;
- Figure 23 illustrates a contour based on the negative pressures in the plane XY in the median section of the suction tube, for the headpiece of Figure 14;
- Figure 24 illustrates a contour based on the negative pressures in the plane XY in the median section of the suction tube, for the headpiece of Figure 15;
- Figure 25 illustrates a diagram summarising the analyses of the previous drawings, wherein the possible trajectories for the air (and therefore the shavings) inside the headpiece of Figure 14 are shown; and
- Figure 26 illustrates a diagram summarising the analyses of the previous drawings, wherein the possible trajectories for the air (and therefore the shavings) inside the headpiece of Figure 15 are shown.

### Detailed description of embodiments of the invention

### Basic simplified structure

With reference to Figure 6, the headpiece according to the invention is formed by an upper portion d and by a lower portion e with respective edges b joined together (for example, in a removable fashion).

The lower portion e consist of a first fixed part e_{f} and a second part eᵥ movable about the axis ax of the headpiece (see arrow in the drawing), in such a way as to superpose completely or partly the inside or outside of the fixed part ef. The parts e_{f} and eᵥ preferably have different dimensions, e_{f} covering an angle of 3 /4 or /2 and eᵥ covering an angle of /4 or /2 around ax.

The purpose of the lower edge k of the lower portion is to make contact with the work piece, and it is therefore preferably formed by soft bristles. The lower edge k of the headpiece is divided into two parts corresponding to the edges of the parts e_{f} and eᵥ.

The opening and closing of the variable part eᵥ is guaranteed, for example, by means of a mechanical adjustment actuated electromechanically. This mechanical adjustment could be achieved, for example, by a gear wheel f mounted in a movable fashion, which crossing a gear wheel g is actuated by a servomotor h. For the working of flat materials (for example, drilling, nesting etc.) the variable portion of headpiece eᵥ is closed. For the working of edges, the variable part of headpiece eᵥ is open and for the working of three-dimensional pieces the variable part of headpiece eᵥ is either open or closed.

On the outer side of the upper half-headpiece d (but it is also possible on the lower fixed part ef) is fixed a suction tube i in the tangential direction. More specifically, the evacuation tube i may be tangential to the headpiece, and this brings considerable advantages as described below.

Between the suction headpiece (a or d/e) and the spindle there is a sealing element j which may be adjustable in length.

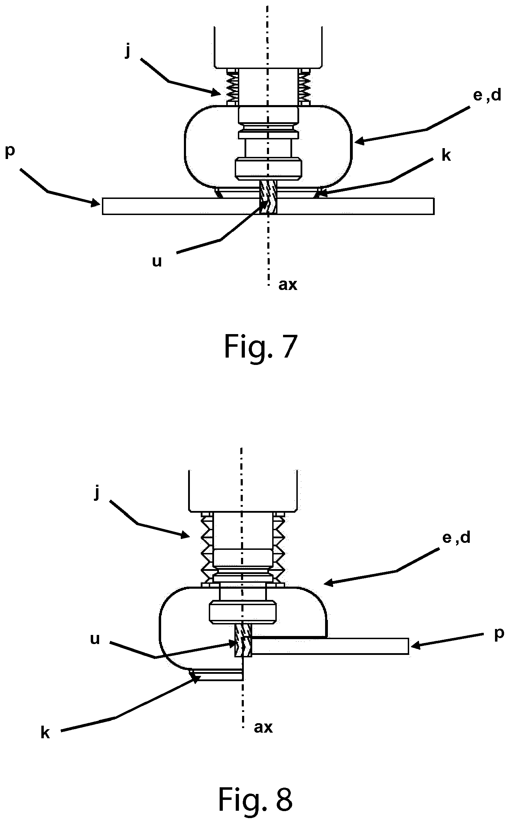

Figure 7 clearly shows how the headpiece a,d according to the invention preferably has a shape with rotational symmetry about the axis ax, that is to say, about the working tool u.

Figure 8 illustrates the machining of an edge of a piece p, and the variable part eᵥ is superposed on the fixed part ef, and therefore not visible in this section.

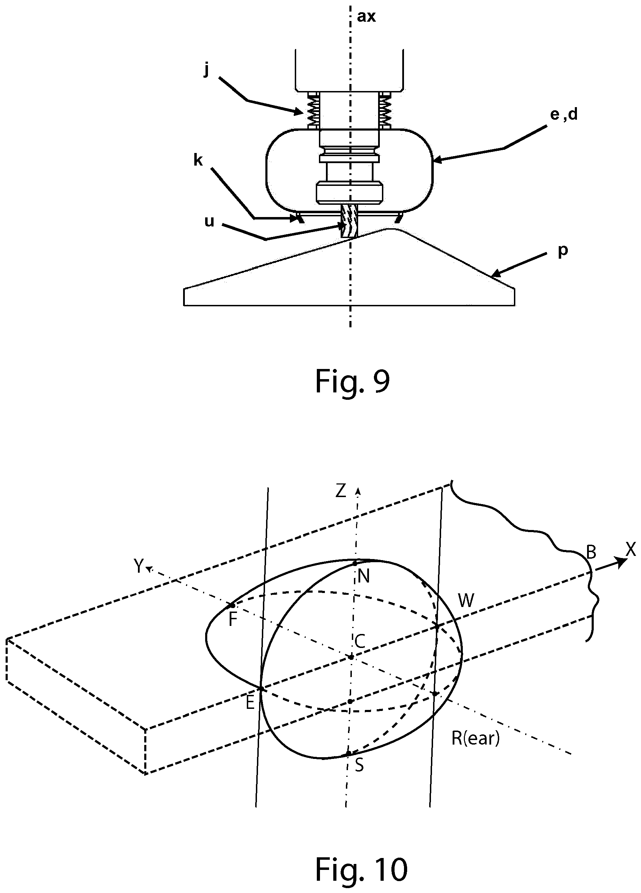

Figure 9 illustrates the machining of a three-dimensional piece p, in which the variable part eᵥ is not superposed on the fixed part ef, and is therefore visible.

Figure 10 illustrates the same situation as Figure 8 but with a three-dimensional view and in a very schematic fashion. The axis z corresponds to the axis ax and the mobile part eᵥ has a circular extension on n angel of /2.

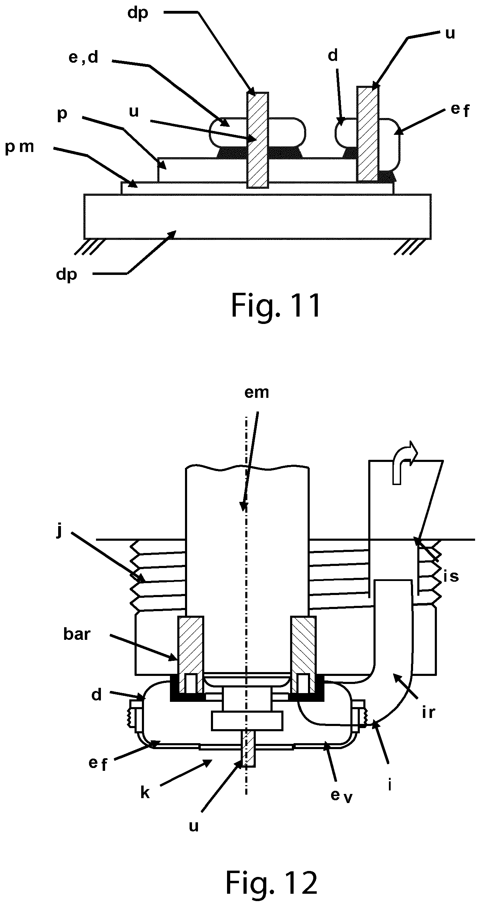

With reference to Figure 11, the piece p is normally worked after having rested it on a support panel pm which is in turn rested on the machine surface dp. The same drawing illustrates two work situations with, respectively, the headpiece radially closed (on the left) and with the headpiece radially open (partially) (on the right).

With reference to Figure 12, the headpiece e,d may be of a toroidal shape with circular upper and lower openings m. Tangentially to the headpiece is fixed an evacuation tube i. On the edge of at least one opening m is fixed a rigid element (for example, made of metal) which is connected to the coupling body (not illustrated) of the tool by means of a rigid arm o.

Figure 12 illustrates the headpiece in use in an electric spindle em. The term "bar" means an anti-rotation block, provided for safety reasons. The tube i joins ir with another tube is which forms an outlet upwards.

The device for sucking shavings according to the invention must be shaped modularly or in an adaptive manner by means of elastic elements, according to the purpose of the milling cutter (the axis of rotation is orthogonal to the surface of the work piece or, on the other hand, laterally, the axis of rotation is parallel to the surface of the work piece).

With reference to Figure 9, due to the high level of adaptability provided by the headpiece, even convex 3D surfaces can be sucked.

The suction headpiece is at a minimum distance from the milling cutter spindle. By means of this minimum distance to the milling spindle or to the work piece a relatively small volume is sufficient to achieve an exceptional level of collection of shavings. The preliminary tests with the suction headpiece according to the invention have reached a level of collection of shavings of up to 100%.

As a result of the form of the headpiece with a rotational symmetry as well as the tangential arrangement of the suction pipe, the jet of shavings is also channelled and the rotation of the shavings is maintained. By means of this, the shavings are conveyed directly into the suction tube. The degree of collection of the shavings is therefore significantly improved.

### Efficiency simulations

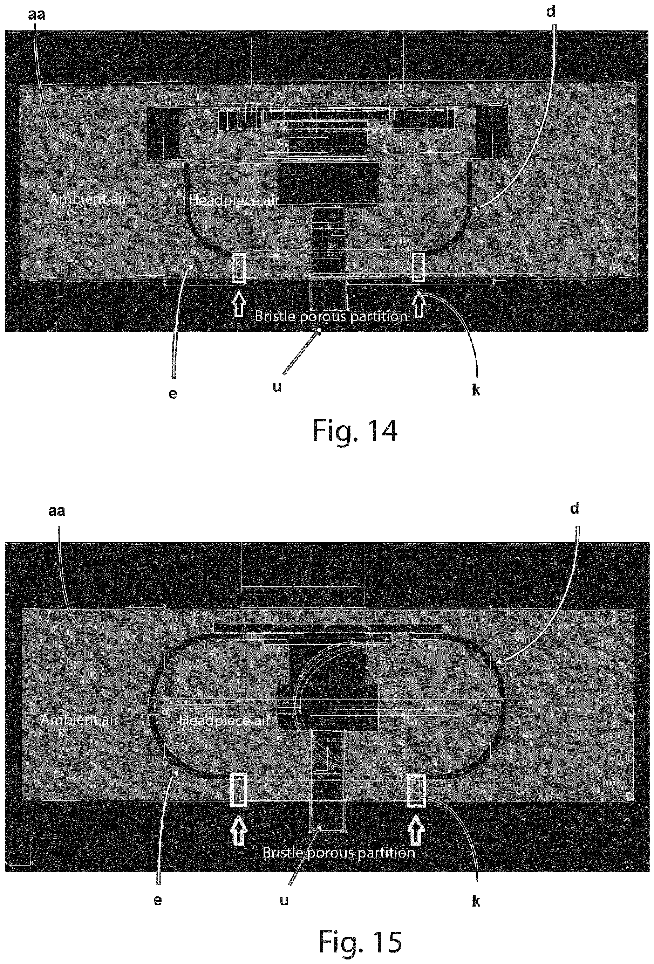

Figures 14 to 26 show simulations, confirmed by laboratory tests, of the flow of air - and therefore of the shavings - in two headpieces with different geometries.

The first headpiece d,e of Figure 14 is a headpiece according to the prior art, with an axial symmetry about the working tool u. The upper portion d is a cylinder, whilst the lower portion e is a ring obtained from the surface of a cup. An evacuation tube is connected to the first headpiece, radially to the headpiece.

The second headpiece d,e of Figure 15, according to the invention, again has an axial symmetry about the working tool u. In this case, both the upper portion d and the lower portion e consist of a ring obtained from the surface of a cup. The two portions joined together have the approximate shape of an anchor ring. An evacuation tube is connected to the second headpiece, tangentially to the headpiece.

A series of simulations have been performed to observe the difference in efficiency of the two geometries. Other similar simulations and relative laboratory tests have been performed for different geometries.

Some important boundary conditions for the CFD simulation have been:
- the speed of 25 m/s has been set on the section of the outlet tube;
- the tool is rotated at a speed of 2500 rad/s in an anticlockwise direction;
- the surfaces exposed to the ambient air have been put at an ambient pressure of 101325 Pa; and
- The volume occupied by the bristles is set as a porous material with a porosity of 0.1.

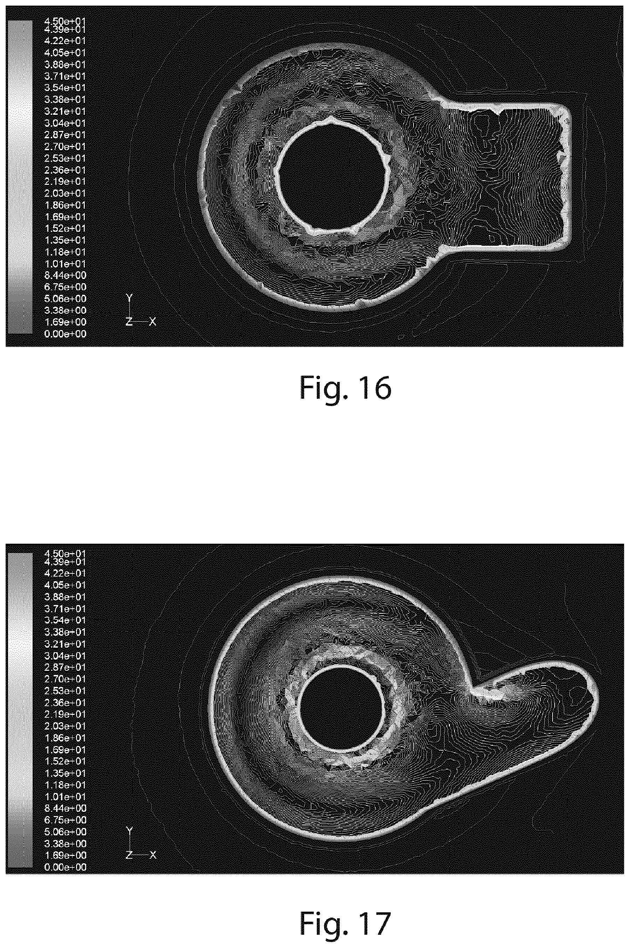

Figures 16 and 17 show an important difference in the contour based (lines tangent to the speed range projected on the plane of the drawing) on the negative pressures in the plane XY in the median section of the suction tube. In fact, in the regions opposite the suction tube, the behaviour is different: in the headpiece with the tangential tube the speeds close to the walls are higher than that of the first headpiece with the radial tube.

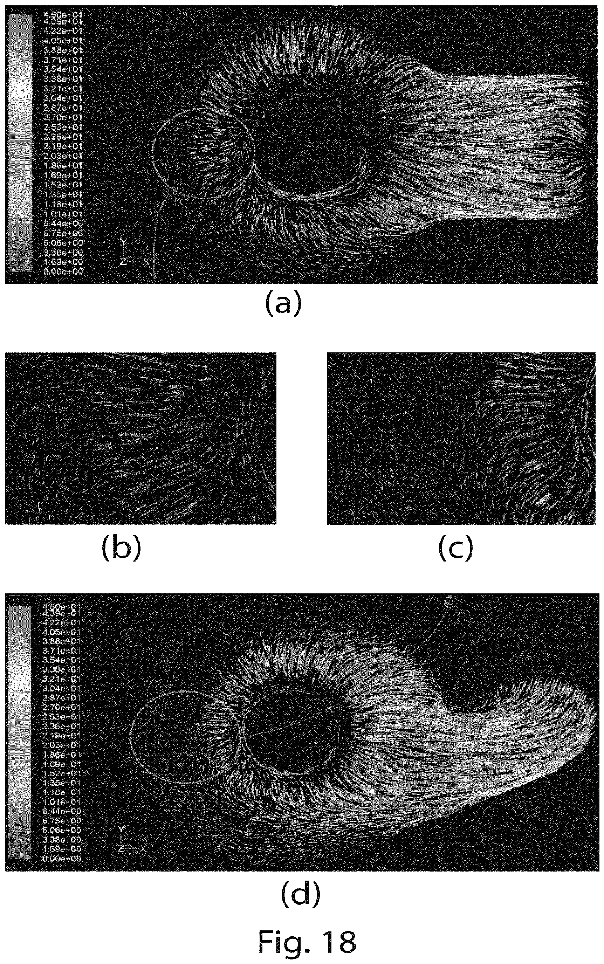

As confirmation, Figure 18 from (a) to (d) show an important difference in the speed vectors in the plane XY in the median section of the suction tube. In fact, also in this case, in the regions opposite the suction tube, a different behaviour may be noted: in the first headpiece with the radial tube the speed vectors are oriented to the headpiece in a radial manner, whilst in the modified headpiece these vectors are tangential. This effect is presumably due to the capacity of the modified headpiece to generate a mass of air in rotation with respect to the tool in an anticlockwise direction, favouring the escape of the shavings even in the most critical regions for the suction.

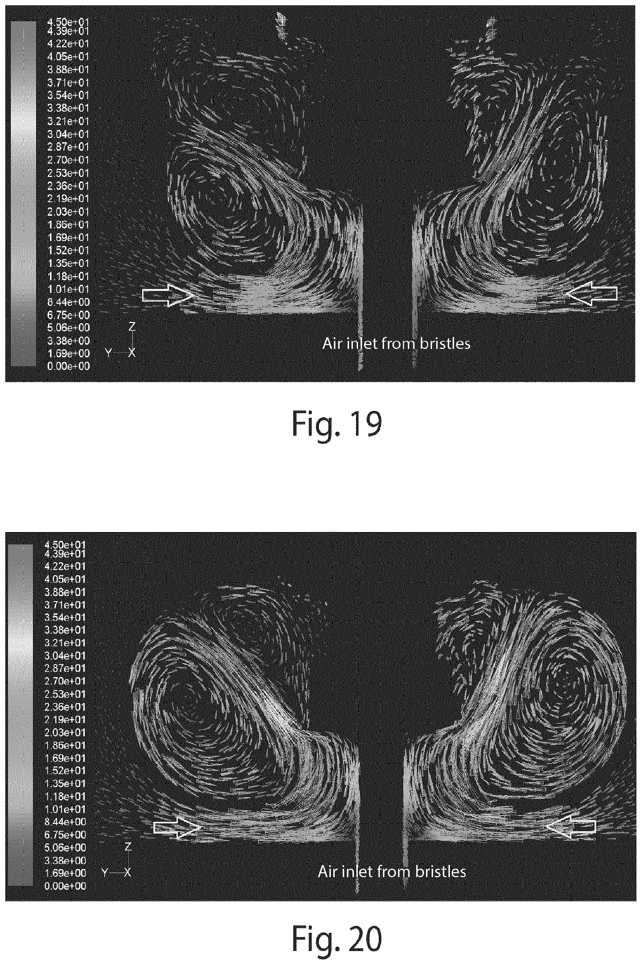

Figures 19 and 20 show an important difference in the speed vectors in the plane XY in the median section of the headpiece. In fact, it may be noted how the entrance of the air from below through the bristles and the suction of the air from the tube create air vortices. These appear to be more intense and regular in the second nosepiece with the tangential tube with respect to the headpiece with the radial tube, thanks to the geometry of the modified upper headpiece (cup ring).

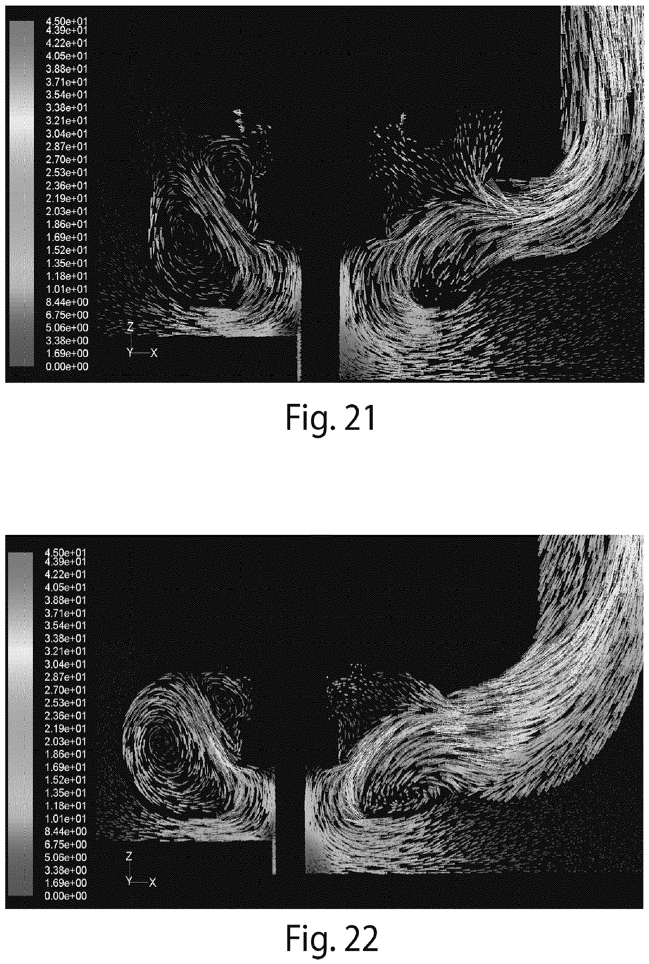

With reference to Figures 21 and 22, the above-mentioned vortices are also visible in the plane ZX and also in this case in the most critical region (that is, opposite the suction tube) they are more intense and regular in the headpiece with the tangential tube.

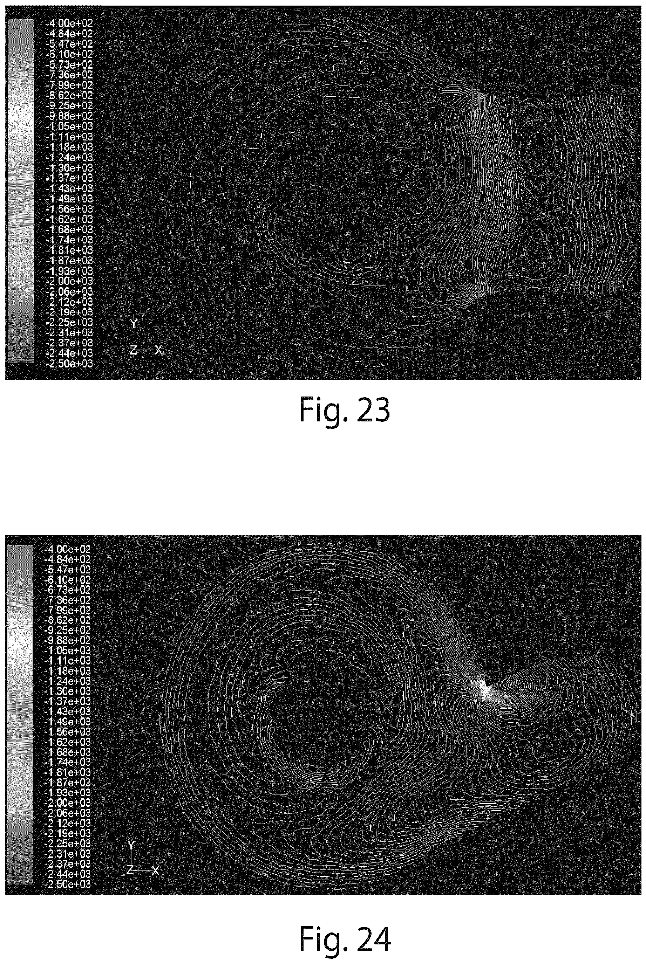

Figures 23 and 24 show an important difference in the contour based on the negative pressures in the plane XY in the median section of the suction tube. In fact, the negative pressures generated inside the headpiece are at least double in the headpiece with the tangential tube with respect to those generated in the prior art headpieces.

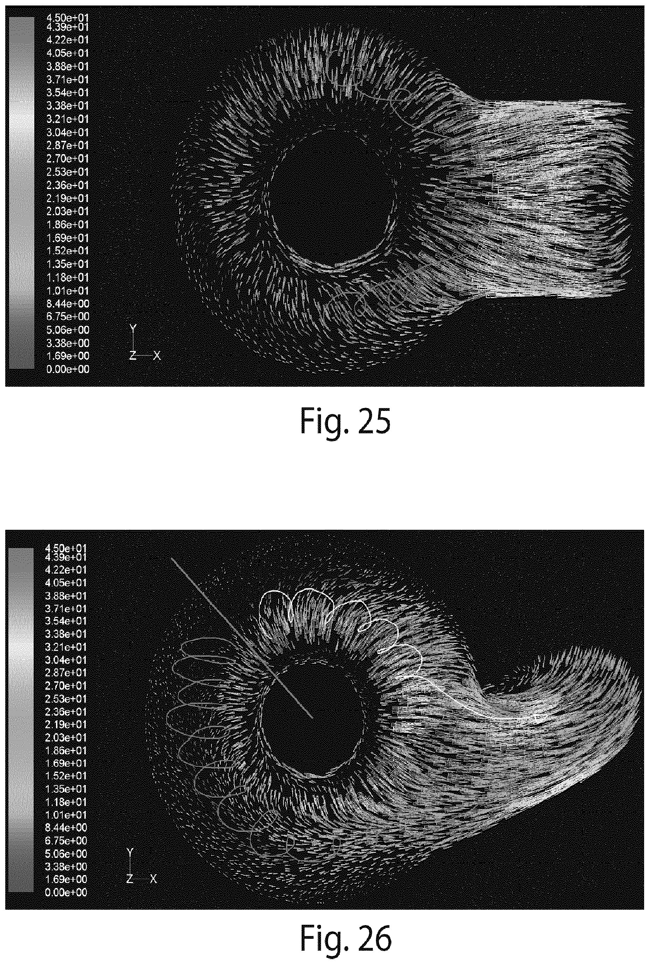

With reference to Figures 25 and 26, summarising the various effects seen previously, the possible trajectories for the air inside the two headpieces have been drawn. It may be noted that the air tends to be stationary in the regions furthest from the suction tube of the headpiece according to the prior art. The headpiece according to the invention shows, in the same regions, a significantly more efficient suction. This greater efficiency can also be inferred from the negative pressure generated on the outlet section:
- original headpiece -1391.7 Pa;
- modified headpiece -1725.6 Pa.

Therefore, with the same suction speed, the headpiece according to the invention generates a negative pressure of greater than 24%.

The invention applies to, amongst others, the wood and plastics industries, suction techniques, extraction techniques, and safety at the workplace.

The preferred embodiments have been described above and variants to the invention have been suggested, but it shall be understood that the invention may be modified and/or adapted by experts in the field without thereby departing from the scope of the inventive concept, as defined in the claims herein.

## Claims

1. Shavings suction headpiece positionable around a working tool for a workpiece, the working tool having a main axis, comprising:
- a first opening (m1);
- a second opening (m2);
- a side wall (e, d), extending between said first and said second opening, with axial symmetry about an axis (ax) passing through said first (m1) and second (m2) opening, said axis (ax) being, in use, substantially coincident with the main axis of said working tool (u);
- a shavings evacuation tube (i) connected to said side wall (e, d) with airflow connection;
- contact means (k) for said workpiece, the contact means being placed on the edge of said second opening (m2);
The headpiece being **characterized in that**:
- said side wall (e, d) is composed of a top portion (d) connected to a lower portion (e) with respect to the direction of said axis (ax);
- said lower portion (e) is perimetrically subdivided around said axis (ax) into a first perimeter portion (ef) and a second perimeter portion (ev); and
- said first perimeter portion (ef) and said second perimeter portion (ev) are configured to slide one over the other by rotating with respect to said axis (ax).

2. Shavings suction headpiece according to claim 1, wherein said first perimeter portion (ef) is fixed and said second perimeter portion (ev) is movable.

3. Shavings suction headpiece according to claim 1 or 2, wherein said first perimeter portion (ev) extends over an arc of /2 around said axis (ax).

4. Shavings suction headpiece according to claim 1 or 2, wherein said first perimeter portion (ev) extends over an arc of /4 around said axis (ax).

5. Shavings suction headpiece according to any one of the preceding claims, wherein said side wall (e, d) has a toroidal shape and said shavings evacuation tube (i) is substantially radially connected.

6. Shavings suction headpiece according to any one of claims 1 to 4, wherein said side wall (e, d) has a toroidal shape and said shavings evacuation tube (i) is connected substantially tangentially to said side wall (e, d).

7. Shavings suction headpiece according to claim 6, wherein said shavings evacuation tube (i) is substantially tangent to said upper portion (d).

8. Shavings suction headpiece according to any one of the preceding claims, wherein said upper portion (d) has substantially the same outer shape as said lower portion (e) when said first perimeter portion (ef) is aligned with said second perimeter portion (ev).

9. Shavings suction headpiece according to any one of the preceding claims, wherein said upper portion (d) is flush to said first opening (m1) and said lower portion (e) is flush to said second opening (m2).

10. Shavings suction headpiece according to any one of the preceding claims, wherein said contact means (k) on the edge of said second opening comprise bristles.

## Patentansprüche

1. Spänesauger-Kopfstück, das um ein Arbeitsinstrument für ein Werkstück positionierbar ist, wobei das Arbeitsinstrument eine Hauptachse hat, bestehend aus:
- einer ersten Öffnung (m1);
- einer zweiten Öffnung (m2);
- einer Seitenwand (e, d), die sich zwischen der ersten und der zweiten Öffnung erstreckt, mit axialer Symmetrie über eine Achse (ax), die die besagte erste (m1) und die zweite (m2) Öffnung durchläuft, wobei die besagte Achse (ax), wenn sie verwendet wird, im Wesentlichen mit der Hauptachse des Arbeitsinstruments zusammenfällt (u);
- einem an diese Seitenwand (e, d) angeschlossenen Rohr (i) für die Ableitung der Späne
mit Luftstromverbindung;
- Kontaktverbindung (k) für dieses Werkstück, wobei die Kontaktverbindung sind am Rande der besagten zweiten Öffnung (m2) platziert ist;
Das Kopfstück ist **dadurch gekennzeichnet, dass**:
- diese Seitenwand (e, d) aus einem oberen Abschnitt (d) besteht, der in Bezug auf die Richtung dieser Achse (ax) mit einem unteren Abschnitt (e) verbunden ist;
- der besagte untere Abschnitt (e) perimetrisch um die besagte Achse (ax) in einen ersten Perimeterabschnitt (ef) und einen zweiten Perimeterabschnitt unterteilt ist
(ev); und
- der besagte erste Perimeterabschnitt (ef) und der besagte zweite Perimeterabschnitt (ev.) so konfiguriert sind, dass sie sich durch Drehung in Bezug auf die Achse (ax) übereinander schieben.

2. Spänesauger-Kopfstück nach Anspruch 1, wobei der besagte erste Perimeterabschnitt (ef) fixiert ist und der zweite Perimenterabschnitt (ev) beweglich ist.

3. Spänesauger-Kopfstück nach Anspruch 1 oder 2, wobei sich der besagte erste Perimeterabschnitt (ev) über einen Bogen von /2 um die besagte
Achse (ax) erstreckt.

4. Spänesauger-Kopfstück gemäß Anspruch 1 oder 2, wobei sich der besagte erste Perimeterabschnitt (ev) über einen Bogen von /4 um die besagte Achse (ax) erstreckt.

5. Spänesauger-Kopfstück nach einem der
vorstehenden Ansprüche, wobei die besagte Seitenwand (e, d) eine toroidale Form aufweist, und das besagte Rohr für die Ableitung der Späne (i) im Wesentlichen radial verbunden ist.

6. Spänesauger-Kopfstück gemäß einem der Ansprüche 1 bis 4, wobei die besagte Seitenwand (e, d) eine toroidale Form aufweist und das besagte Rohr für die Ableitung der Späne (i) im Wesentlichen tangentiell mit dieser Seitenwand verbunden ist
(e, d).

7. Spänesauger-Kopfstück nach Anspruch 6, wobei das besagte Rohr für die Ableitung der Späne (i) im Wesentlichen den besagten oberen Abschnitt berührt
(d).

8. Spänesauger-Kopfstück nach einem der vorstehenden Ansprüche, wobei der besagte obere Abschnitt (d) im Wesentlichen dieselbe äußere Form aufweist wie der untere Abschnitt (e), wenn der besagte erste Perimeterabschnitt (ef) an dem zweiten Perimeterabschnitt (ev) ausgerichtet ist.

9. Spänesauger-Kopfstück nach einem der vorstehenden Ansprüche, wobei der besagte obere Abschnitt (d) mit der besagten ersten Öffnung (m1) bündig ist und der besagte untere Abschnitt (e) mit der zweiten Öffnung bündig ist
(m2).

10. Spänesauger-Kopfstück gemäß einem der
vorstehenden Ansprüche, wobei die besagte Kontaktverbindung (k) am Rand der besagten zweiten Öffnung Borsten besitzt.

## Revendications

1. Chapeau d'aspiration de copeaux pouvant être positionné autour d'un outil d'usinage pour une pièce, l'outil d'usinage ayant un axe principal, comprenant :
- une première ouverture (m1) ;
- une deuxième ouverture (m2) ;
- une paroi latérale (e, d), s'étendant entre ladite première et ladite deuxième ouverture, avec une symétrie axiale autour d'un axe (ax) passant par ladite première (m1) et deuxième (m2) ouverture, ledit axe (ax) étant, en utilisation, essentiellement coïncidant avec l'axe principal dudit outil d'usinage (u) ;
- un tube d'évacuation (i) des copeaux raccordé à ladite paroi latérale (e, d) avec raccord de flux d'air ;
- des moyens de contact (k) pour ladite pièce, les moyens de contact étant placés sur le bord de ladite deuxième ouverture (m2) ;
le chapeau étant **caractérisé en ce que** :
- ladite paroi latérale (e, d) est composée d'une portion supérieure (d) raccordée à une portion inférieure (e) par rapport à la direction dudit axe (ax) ;
- ladite portion inférieure (e) est périmétralement subdivisée autour dudit axe (ax) en une première portion de périmètre (ef) et une deuxième portion de périmètre
(ev) ; et
- ladite première portion de périmètre (ef) et ladite deuxième portion de périmètre (ev) sont configurées pour coulisser l'une sur l'autre en tournant par rapport audit axe (ax).

2. Chapeau d'aspiration de copeaux selon la revendication 1, dans lequel ladite
première portion de périmètre (ef) est fixe et ladite deuxième portion de périmètre (ev) est mobile.

3. Chapeau d'aspiration de copeaux selon la revendication 1 ou 2, dans lequel ladite première portion de périmètre (ev) s'étend sur un arc de/2 autour dudit axe (ax).

4. Chapeau d'aspiration de copeaux selon la revendication 1 ou 2, dans lequel ladite première portion de périmètre (ev) s'étend sur un arc de /4 autour dudit axe (ax).

5. Chapeau d'aspiration de copeaux selon l'une quelconque des revendications précédentes, dans lequel ladite paroi latérale (e, d) a une forme toroïdale et ledit tube d'évacuation (i) des copeaux est raccordé de manière essentiellement radiale.

6. Chapeau d'aspiration de copeaux selon l'une quelconque des revendications de 1 à
4, dans lequel ladite paroi latérale (e, d) a une forme toroïdale et ledit tube d'évacuation (i) des copeaux est raccordé à ladite paroi latérale (e, d)) de manière essentiellement tangente.

7. Chapeau d'aspiration de copeaux selon la revendication 6, dans lequel ledit tube d'évacuation (i) des copeaux est essentiellement tangent à ladite portion supérieure (d).

8. Chapeau d'aspiration de copeaux selon l'une quelconque des revendications précédentes, dans lequel ladite portion supérieure (d) a essentiellement la même forme extérieure que ladite portion inférieure (e) lorsque ladite première portion de périmètre (ef) est alignée avec ladite deuxième portion de périmètre (ev).

9. Chapeau d'aspiration de copeaux selon l'une quelconque des revendications précédentes, dans lequel ladite portion supérieure (d) est à ras de ladite première ouverture (m1) et ladite portion inférieure (e) est à ras de ladite deuxième ouverture (m2).

10. Chapeau d'aspiration de copeaux selon l'une quelconque des revendications précédentes, dans lequel lesdits moyens de contact (k) sur le bord de ladite deuxième ouverture comprennent des poils.
